# EUROPÄISCHE PATENTSCHRIFT

(11) **EP 1 060 985 B1**
(45) Veröffentlichungstag und Bekanntmachung des Hinweises auf die Patenterteilung: **06.05.2004**
(21) Anmeldenummer: 00112464.3
(22) Anmeldetag: 10.06.2000
(51) Int. Cl.: B64C 13/08, B64D 13/08

(54) **Anordnung zur Klimatisierung von Unterflurbereichen eines Passagierflugzeuges**
Air conditioning system for passenger aircraft cargo space
Système de climatisation pour la soute à fret d'un aéronef de passager

(30) Priorität: 17.06.1999 DE 19927606
(43) Veröffentlichungstag der Anmeldung: 20.12.2000
(73) Patentinhaber: Airbus Deutschland GmbH, 21129 Hamburg (DE)
(72) Erfinder: Scheffler, Hans-Joachim, Dipl.-Ing., 20251 Hamburg (DE); Markwart, Michael, Dipl.-Ing., 25469 Halstenbek (DE); Buchholz, Uwe, Dipl.-Ing., 21640 Bliedersdorf (DE)
(74) Vertreter: Hansmann, Dierk, Dipl.-Ing.

(56) Entgegenhaltungen:
- US-A- 4 445 342
- US-A- 5 516 330

## Beschreibung

Die Erfindung bezieht sich auf eine Anordnung zur Klimatisierung von Unterflurbereichen eines Passagierflugzeuges. Ihre Anwendung liegt im Bereich der verbesserten (effizienten) Klimatisierung von Frachträumen und / oder anderweitig verwendeten Unterflurbereichen, die von einer rationellen Ausnutzung vorhandener Wärmeenergie-Ressorcen des Passagierflugzeuges begleitet wird. Gleichfalls werden mit der Erfindung prophylaktische Maßnahmen des Brandschutzes umgesetzt.

Es sind verschiedene Lösungen bekannt, nach denen Maßnahmen der Klimatisierung von Rumpfbereichen (inclusive von Frachtraumbereichen) für bekannte Flugzeugtypen vorgeschlagen wird. Danach ist es bekannt, daß der Unterdeck-Bereich eines Passagierflugzeuges (ausgewählter Flugzeugtypen) auch mit Schlaf-Container(n) ausgestattet wird. Um diese Schlafbereiche für den einzelnen Passagier verträglich zu klimatisieren, wird die dorthin eingeblasene Luft mit einem elektrischen Heizer auf die vorgesehene Raumtemperatur aufgeheizt oder mit einer Kühleinrichtung abgekühlt. Die eingeblasene Luft setzt sich aus verschiedenen Luftkomponenten zusammen, wobei auch Teilmengen der wiederaufbereiten und (aus den Passagierbereichen stammenden) Abluft rezirkuliert werden, die man zusätzlich (während der Umsetzung von Maßnahmen der Wiederaufbereitung der rezirkulierten Luft) mit geeigneten Kühleinrichtungen (bspw. mit einem Flugzeughaut-Wärmetauscher) auf eine bestimmte Temperatur abgekühlt. Dabei lassen sich während des Kühlprozesses nur Temperaturgefälle innerhalb einem eng begrenzten Temperatur-Rahmen umsetzen. Bei der Luft-Aufbereitung wird deshalb wenigstens ein Mehrbedarf an zusätzlich benötigter Elektroenergie zum Betreiben des Heizers zu disponieren sein, da der Energiebedarf zum Betreiben der Klimaaggregate ohnehin vorgesehen wird. Dabei wird der Energie-Mehrbedarf zu Lasten der (ohnehin knappen) Energieressorcen und der Betreiberkosten (des Flugzeuges) wirken.

Als Vorbild für die Umsetzung von Maßnahmen der Klimatisierung von (allgemein) Rumpfbereichen eines Flugzeuges wird die DE 43 35 152 C1 genannt, weil sie auch Maßnahmen zur Klimatisierung von Unterflurbereichen (hier: des Elektrotechnik-/Elektronikbereiches und der Frachtbereiches) eines Passagierflugzeuges vorschlägt. Gleichermaßen bezieht sich das vorgestellte Umluftsystem auch auf die Klimatisierung des Passagier- und Cockpitbereiches, wobei der Unterflurbereich dem Umluftsystem mit angeschlossen ist.

Aus dieser Druckschrift wird der im Flugzeugbau kundige Fachmann entnehmen, daß eine Luftmischereinheit den Passagier- und Cockpitbereich eines Passagierflugzeuges mit aufbereiteter Mischluft versorgt. Dabei setzt sich die Mischluft aus Teilmengen der verbrauchten Abluft, die dem Passagier- und Cockpitbereich abgeführt und danach mittels einer sogenannten Kabinenrecyclingeinheit (bestehend aus: einer Partikel- und/oder Geruchsfiltereinheit, einer Lüftereinheit, einer Kohlendioxidadsorbereinheit und einer Wärmeaustauschereinheit) aufbereitet wird, und der extern abgezapften Frischluft, die von den Triebwerken des Flugzeuges als heiße Zapfluft bezogen wird, zusammen, die der Mischereinheit zugeleitet werden und nach einem Mischvorgang (der verschiedenen Luftkomponenten) von der Mischereinheit dem (den) Passagier- und Cockpitbereich(en) als Mischluft eingeblasen werden. Erwähnt wird, daß die (dem Passagier- und Cockpitbereich) rückgeführte Abluft vor dem Verlassen der Recyclingeinheit mittels der (ihr integrierten) Wärmetauschereinheit, der extern bezogene kühle Außenluft zugeführt wird, durch letztere mittels der kühlen Außenluft auf ein klimaverträgliches temperiertes Wärmeniveau abgekühlt wird, die dann als (sogenanntermaßen bezeichnete) aufbereitete Rezirkulationsluft der Mischereinheit zugeführt wird. Im weiteren wird vorgeschlagen, daß die Mischluft vor ihrem Eintritt in den Klimabereich (genauer: in den Passagier- und Cockpitbereich) mittels einer weiteren nachgeregelten (abgezweigten) Teilmenge von (triebwerksentnommener) Zapfluft nachtemperiert wird, deren Einspeisung durch eine (sogenannte) Trimmluftsteuerventileinheit kontrolliert wird. Diese aus zwei Trimmluft-Regelventilen aufgebaute Einheit regelt die getrennte Zufuhr genannter Trimmluft-Teilmenge(n) (einmal) für den Pasagierbereich und (zum anderen) für das Cockpit. Die unterdecks befindlichen Unterflurbereiche des Flugzeuges werden (nur indirekt) davon erfaßt, weil eine Belüftung des erwähnten Elektrotechnik-/Elektronikbereiches und des Frachtraumbereiches nur über den Cockpitbereich durchdringende Leckage(n) vorgeschlagen wird. Dabei erreicht diese Frischluft den Elektrotechnik-/Elektronikbereich und den Frachtbereich mit einer Durchdringung von Leckagen. Sie verläßt den Frachbereich entweder über ein Auslaßventil oder über eine Rumpfleckage und dringt so aus dem Druckrumpf nach außen. Diese vorgestellte Lösung bezieht sich hauptsächlich auf den Ausgleich von Leckagen im Druckrumpf, wenngleich sie auch mit auf die Aufrechterhaltung der Luftqualität in der Flugzeugkabine durch Zufuhr von Frischluft (aber nicht primär) abzielt. Dabei wird die Frischluftzufuhr nur zum Ersatz der Rumpfleckagen benötigt. Entsprechende Maßnahmen zur verbesserten Klimatisierung der Unterflurbereiche unter der Maßgabe eines rationellen Umganges mit vorhandenen Energieressorcen werden nicht vorgeschlagen. Auch werden keine Maßnahmen des prophylaktischen Brandschutzes angedacht.

Aus Dokument US-A-4 445 342 ist eine Anordnung zur Klimatisierung von verschiedenen Flugdeck-Bereichen bekannt, bestehend aus einer mit Frischluft und Teilmengen von Kabinenluft versorgten Luftmischereinheit, die über eine ihr angeschlossene Zuluft-Hauptleitung, die mit einem Flugdeck-Bereich verbunden ist,
temperierte Mischluft rezirkuliert. Weiterhin ist der Zuluft-Hauptleitung eine Trimluft-Leitung zugeschalten, die einer Versorgungsleitung abgezweigt ist.

Demzufolge liegt der Erfindung die Aufgabe zugrunde, eine Anordnung zur Klimatisierung von Unterflurbereichen eines Passagierflugzeuges anzugeben, mit der die Unterflurbereiche (eines zonal unterteilten Unterdeckbereiches), die sich in der Hauptsache auf dort vorhandenen Frachtraum mit oder ohne eingerüstetem(n) Schlaf-Container(n) und auf einen angrenzenden Treppenhausbereich beziehen, rationell klimatisiert (angemessen be- und entlüftet) werden, wobei in jenen Bereichen entsprechende Maßnahmen des prophylaktischen Brandschutzes vorzusehen sind, um weitestgehend die flächenmäßige Ausdehnung eines Brandes zu verhindern, wenigstens jedoch die Entlüftung der mit Rauch und sonstigen gefährdenden Stoffen versetzten Abluft aus dem Frachtraum einschließlich dem (den) Schlaf-Container(n) zu vermeiden.

Diese Aufgabe wird durch die im Anspruch 1 angegebenen Maßnahmen gelöst. In den weiteren Unteransprüchen sind zweckmäßige Weiterbildungen und Ausgestaltungen dieser Maßnahmen angegeben.

Die Erfindung ist in einem Ausführungsbeispiel anhand der beigefügten Zeichnungen näher beschrieben. Es zeigen
- Fig. 1: die Anordnung zur Klimatisierung eines Flugzeug-Frachtraumes und
- Fig. 2: die Anordnung zur Klimatisierung von eingebauten Schlafcontainern im Flugzeug-Frachtraum.

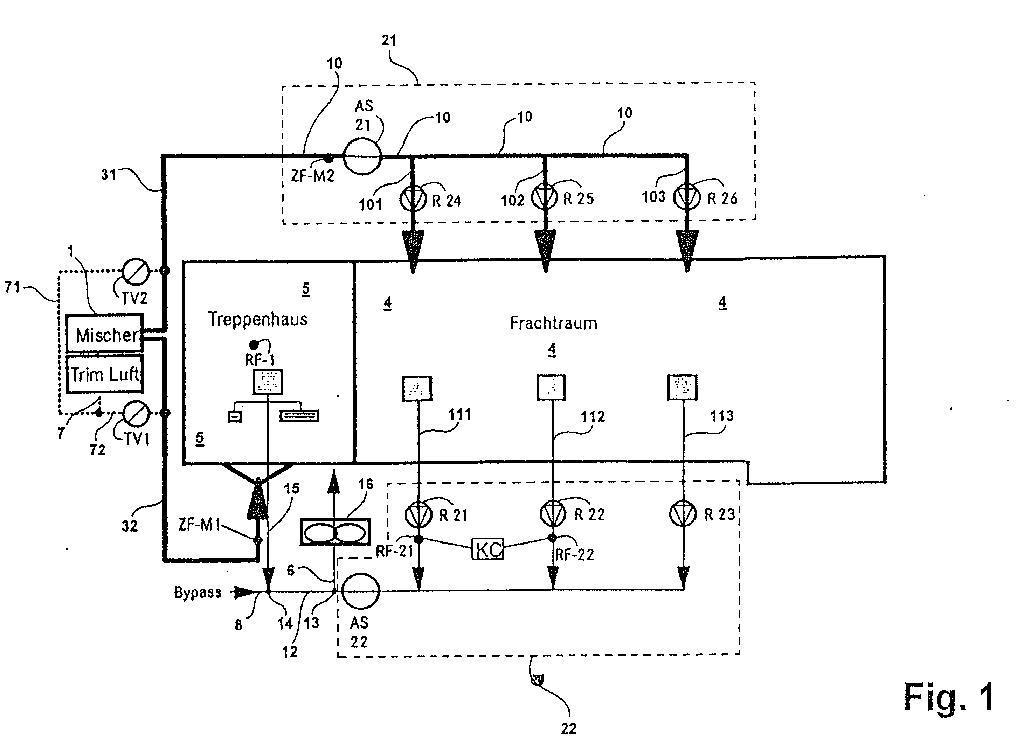

In der Fig.1 wird dem Betrachter der Grundriß eines Unterflurbereiches für ein Passagierflugzeug vermittelt. Der gesamte Unterflurbereiches umfaßt zwei getrennte Bereiche. Danach wird ein erster Unterflurbereich 4 als Frachtraum genutzt, während ein daneben befindlicher zweiter Unterflurbereich als Treppenhaus (Treppenaufgang) benutzt wird, der zum Oberdeck in den Passagierbereich führt. Beide Raumbereiche werden von einer Unterdeck-Klimaanlage klimatisiert.

Diese Unterdeck-Klimaanlage setzt sich aus einer Anordnung von mehreren Einheiten zusammen, die über Luftverbindungsleitungen miteinander verbunden sind. Deswegen wird man korrekt einen Aufbau der Unterdeck-Klimaanlage gemäß einer Anordnung zur Klimatisierung von Unterflurbereichen eines Passagierflugzeuges vorfinden, die sich hauptsächlich aus einer Luftmischereinheit 1, einer Zulufteinheit 21, einer Ablufteinheit 22, einem Abluft-Ventilator 16 und einer (nicht bezifferten) Trimmlufteinheit zusammensetzt, zu der auch die als Rohrleitung ausgeführten Luftverbindungsleitungen zählen.

Danach sind der Luftmischereinheit 1, die (von außerhalb des Flugzeuges) mit Frischluft (Zapfluft aus den Triebwerken) und einer beigegebenen Teilmenge von rezirkulierter Umluft (aus dem Passagier- und / oder dem Cockpitbereich stammende Abluft) versorgt wird, zwei Luftverbindungsleitungen angeschlossen, die als Zuluft-Hauptleitungen 31, 32 bezeichnet werden. Der einzelnen Zuluft-Hauptleitung 31, 32 ist separat jeweils eine Trimmluft-Leitung 71, 72 angeschlossen, die an einer Verzweigstelle einer Trimluft-Versorgungsleitung 7, über die (kontrolliert) heiße Bleed Air (abgegebene Frischluft vom Triebwerk) zugeführt wird, angeschlossen ist. Die Einspeisung (die Beigabe) der betreffenden Teilmenge von Bleed Air in die betreffende Zuluft-Hauptleitung 31, 32 wird separat durch ein Trimmluft-Regelventil TV1, TV2, das einer ersten und einer zweiten Trimmluft-Leitung 71, 72 zwischengeschaltet ist, kontrolliert. Dabei besteht die (sogenannte) Trimmlufteinheit aus einem ersten und einem zweiten Trimmluft-Regelventile TV1, TV2, wobei das erste Trimmluft-Regelventil TV1 der ersten Trimmluft-Leitung 71 und das zweite Trimmluft-Regelventil TV2 der zweiten Trimmluft-Leitung 72 zwischengeschalten ist.

Die beiden Trimmluft-Leitungen 71, 72 sind an einer Verzweigstelle einer Trimmluft-Versorgungsleitung 7 angeschlossen. Dabei ist jene erste Trimmluft-Leitung 71 einer ersten Zuluft-Hauptleitung 31 zugeschalten. Mit letzterer wird die kontrollierte Zufuhr von ihr eingespeister Mischluft in den ersten Unterflurbereich 4 (Frachtraum-Bereich) realisiert. Die zweite Trimmluft-Leitung 72 ist einer zweiten Zuluft-Hauptleitung 32 zugeschalten. Letztere realisiert die kontrollierte Zufuhr von ihr eingespeister Mischluft in den zweiten Unterflurbereich 5 (Treppenhaus-Bereich).

Geht man davon aus, daß der erste Unterflurbereich 4 (entweder mit entsprechenden Trennwänden oder) in mehrere (hier: drei einzelne) Frachtraumzonen gesplittet (unterteilt) ist, so wird jede Frachtraumzone separat über eine Zulufteinlaß-Leitung 101, 102, 103 mit entsprechenden Mengen an Mischluft versorgt. Sofern (gemäß der Fig. 1) keine Splittung des ersten Unterflurbereiches 4 (durch entsprechende Trennwandunterteilung - wegen fehlender Notwendigkeit) vorgesehen wird, erfolgt die Belüftung der fiktiv unterteilten Frachtraumzonen mit Mischluft über die ihnen entsprechend separat zugeordnete Zulufteinlaß-Leitung 101, 102, 103. Deshalb sind (gemäß dieser Ausführung) eine erste Zulufteinlaß-Leitung 101, eine zweite Zulufteinlaß-Leitung 102 und eine dritte Zulufteinlaß-Leitung 103 im vordefinierten Abstand zueinander entlang der ersten Zuluft-Hauptleitung 31 angeschlossen. Dabei ist die einzelne Zulufteinlaß-Leitung 101, 102, 103 (in der Regel) einem Deckeneinlaß angeschlossen, von da aus dann die separate Belüftung der betreffenden Frachtraumzone erfolgen wird.

Aus praktischen Erwägungen wird für die Belüftung des ersten Unterflurbereiches 4 eine (sogenannte) Zulufteinheit 21 vorgesehen. Diese Zulufteinheit 21, die (nach dieser Ausführung) die Belüftung des ersten Unterflurbereiches mit drei (fiktiv unterteilten) Frachtraumzonen realisieren wird, besitzt folgenden Aufbau. Sie weist eine als Rohrleitung ausgeführte Zuluftleitung 10 auf, die der ersten Zuluft-Hauptleitung 31 verbunden ist. An ihr sind (wie vorher angedeutet) im vordefinierten Abstand (über die Rohrlänge) drei Zulufteinlaß-Leitungen (101, 102, 103) angeschlossen, welche mit den entsprechenden Raumzonen des zonal fiktiv unterteilen ersten Unterflurbereiches 4 verbunden sind. Dabei sind die freien (also nicht der Zuluftleitung 10 angeschlossenen) Rohrleitungsenden der betreffenden Zulufteinlaß-Leitung 101, 102, 103 einem Deckeneinlaß angeschlossen, von dem aus die zugeführte Mischluft der betreffenden Frachtraumzone eingeblasen wird. Dem anschlußfreien Leitungsbereich der Zuluftleitung 10 ist (vor der Abzweigung einer ersten Zulufteinlaß-Leitung 101) ein Zuluft-Regelventil AS-21 zwischengeschaltet.

Mit diesem Zuluft-Regelventil AS-21 läßt sich die Regelung des Volumendurchsatzes (der von der Luftmischereinheit 1 zugeführten) Mischluft umsetzen. Ferner läßt sich bei einem (nur angenommenen) Brandausbruch im Unterflurbereich 4 mit ihm die Zuluftzufuhr unterbinden. Außerdem ist innerhalb jeder einzelnen Zulufteinlaß-Leitung 101, 102, 103 eine Rückschlagklappe R24, R25, R26 angeordnet, wodurch sich der (auf die betreffende Zulufteinlaß-Leitung 101, 102, 103) aufgeteilte Teilstrom der eingespeisten Mischluft luftmengengeregelt über das Zuluft-Regelventil AS-21 und rückstromverhindernd über die betreffende Rückschlagklappe R24, R25, R26 der betreffenden Raumzone einblasen läßt.

Die Abführung der im ersten Unterflurbereich 4 (Frachtraum-Bereich) akkumulierten verbrauchten Abluft wird über eine Abluft-Hauptleitung 6 (in der Regel) nach außerhalb (overboard) des Flugzeuges realisiert. Gleichermaßen zu diesem Zweck wird eine dem zweiten Unterflurbereich 5 (Treppenhaus) verbundene Abluft-Zusatzleitung 15 eingesetzt, die (sinnvollerweise in geeigneter Form) mit der Abluft-Hauptleitung 6 verbunden ist.

Danach wird eine dem ersten Unterflurbereich 4 verbundene Ablufteinheit 22 eingesetzt, die der Abluft-Hauptleitung 6 angeschlossen ist. Die Ablufteinheit 22 ist dermaßen aufgebaut, wonach sie eine Abluftleitung (11) aufweist, die der Abluft-Hauptleitung (6) verbunden ist. An die Abluftleitung 11 sind (gemäß dem Vorbild der Zulufteinheit 21) im vordefinierten Abstand mehrere Ablufteinlaß-Leitungen 111, 112, 113 angeschlossen, welche mit den entsprechenden Raumzonen des zonal fiktiv unterteilten ersten Unterflurbereiches 4 verbunden sind. Dabei ist dem anschlußfreien Leitungsbereiches der Abluftleitung 11, der dem Anschlußbereich der Ablufteinlaß-Leitungen 111, 112, 113 folgt, ein Abluft-Regelventil AS-22 zwischengeschaltet. Mit diesem Abluft-Regelventil AS-22 wird die Regelung des Volumendurchsatzes der abzusaugenden (sogenannten) Unterflur-Abluft, worauf später eingegangen wird, aus dem ersten Unterflurbereich 4 vorgenommen. Außerdem ist innerhalb jeder Ablufteinlaß-Leitung 111, 112, 113 eine Rückschlagklappe R21, R22, R23 angeordnet, wodurch der Rückstrom der zur Abluftleitung 11 transferierten Unterflur-Abluft verhindert wird.

Aus praktischen Erwägungen sind die Abluft-Hauptleitung 6 und die Abluftleitung 11 einer ersten Leitungsverzweigung 13 angeschlossen, die beide Rohrleitungen miteinander verbindet.

Außerdem ist mit dieser ersten Leitungsverzweigung 13 (nach dieser Ausführung) eine (sogenannte) Abluft-Brückenleitung 12 verbunden, an deren verbleibenden freiem Ende eine zweite Leitungsverzweigung 14 angeschlossen ist, mit der die (dem Treppenaufgang verbundene) Abluft-Zusatzleitung 15 und auch eine Bypassleitung 8, auf deren Zweck später eingegangen wird, verbunden.

Es wird erwähnt, daß die Entlüftung der beiden Unterflurbereiche 4, 5 über (sogenannte) Luftauslässe, die im Fußboden- und / oder Deckenbereich installiert sind, vorgesehen ist, denen einzeln die betreffende Abluft-Einlaßleitung 111, 112, 113 und die Abluft-Zusatzleitung 15 angeschlossen ist.

Die Absaugung (Entlüftung) der beiden Unterflurbereiche 4, 5 wird mit einem Abluft-Ventilator 16 vorgenommen. Letzterer ist am freien (also der zweiten Leitungsverzweigung 14 entfernten) Ende der Abluft-Hauptleitung 6 angeschlossen, mit dem die (rück)transferierte Unterflur-Abluft beider Unterflurbereiche 4, 5) angesaugt und (nach dieser Ausführung) in die (figurlich nicht gezeigte) Bilge eines Flugzeugrumpfes geleitet wird. Es wird deshalb ein als ungeregelter Ventilator ausgeführter Abluft-Ventilator 16 verwendet, weil sich mit ihm unter rationeller Ausnutzung vorhandener Wärmeenergie-Ressorcen die nehmlichen Unterflurbereiche 4, 5 sehr effektiv (angemessen) entlüften lassen. Danach entfaltet der ungeregelt ausgeführte Ventilator seine Saugwirkung bei einer (ihm zugeleiteten) ausreichenden Luft-Anströmung, die durch die transferierende Unterflur-Abluft (aus beiden Unterflurbereichen 4, 5) maßgeblich beeinflußt wird. Sollte der auf ihn wirkende Anströmdruck nicht ausreichend sein, wird deshalb, das heißt: "bei nicht ausreichender Luft(an)strömung der transferierenden Unterflur-Abluft" über die Bypass-Leitung 8 der Fehlbedarf durch Zufuhr von abluftfremden flugzeuginternen Luftreserven ausgeglichen. Natürlich läßt sich die gewünschte Saugwirkung auch mit einem elektrisch angetriebenen (eben: geregelten) Abluftventilator umsetzen, jedoch werden zur Umsetzung dieses Vorschlages zusätzliche (an Bord eines Flugzeuges knapp bilanzierte) Bordenergiereserven (durch zusätzlich bereitzustellende elektrische Energie) angegriffen, was zu verhindern gewünscht wird.

Um die vorbeschriebenen Maßnahmen gleichfalls mit einer temperaturverträglichen Klimatisierung der beiden Unterflurbereiche 4, 5 durchzuführen, werden außerdem weitere Maßnahmen umgesetzt.

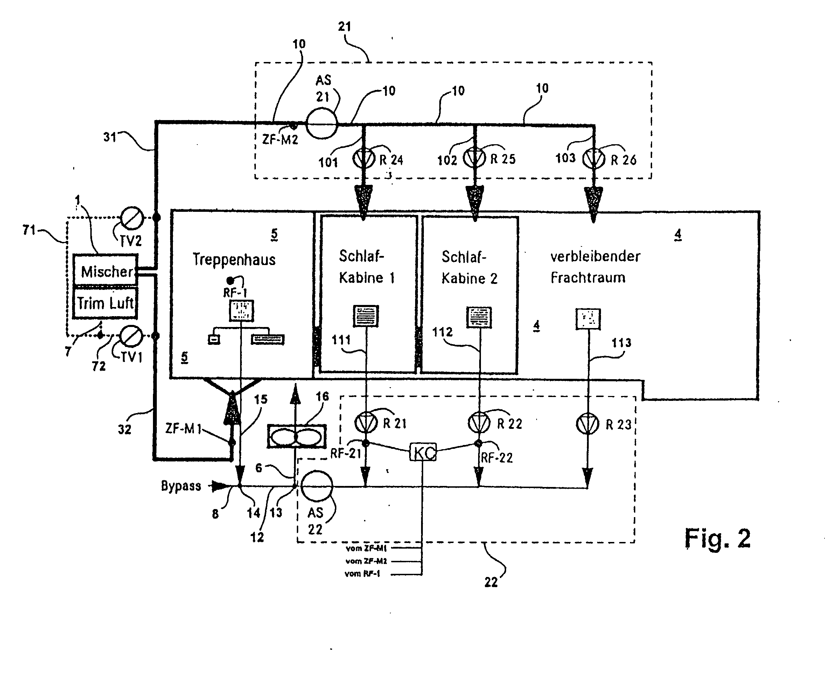

Deswegen ist innerhalb dem Leitungsquerschnitt der ersten Zuluft-Hauptleitung 31 oder des anschlußfreien Leitungsbereich der Zuluftleitung 10 ein erster Temperatursensor ZF-M2 angeordnet, mit dem die Temperatur der zum ersten Unterflurbereich 4 rezirkulierten Mischluft erfaßt wird. Außerdem ist innerhalb dem Leitungsquerschnitt von wenigstens zwei der Ablufteinlaß-Leitungen 111, 112, 113 (nach den Figuren 1 und 2: innerhalb der ersten und zweiten Abluft-Einlaßleitung 111, 112) jeweils ein (zweiter oder dritter) Temperatursensor RF-21, RF-22 angeordnet, mit denen (dem) die Temperatur der (rück)transferierten Unterflur-Abluft der entlüfteten Raumzone erfaßt wird. Weiterhin ist innerhalb dem Leitungsquerschnitt der zweiten Zuluft-Hauptleitung 32 ein vierter Temperatursensor ZF-M1 angeordnet, mit dem die Temperatur der zum zweiten Unterflurbereich 5 rezirkulierten Mischluft erfaßt wird. Zudem ist innerhalb dem zweiten Unterflurbereich 5 ein Raumluft-Sensor RF-1 angeordnet ist, mit dem die Raumlufttemperatur des Treppenaufganges erfaßt wird.

Alle vier Temperatursensoren ZF-M1, ZF-M2, RF-21, RF-22 und der gleichfalls der Raumluft-Sensor RF-1 wandeln die sensitiv erfaßten Lufttemperaturwerte der betreffenden Luftmenge(n) (der zugeführten Hauptluftströme, der Zu- oder Abluft(teilströme) des betreffenden Unterflurbereiches 4, 5 und der Raumluft des Treppenhauses) in digitale Signale um. Da die Sensoren über Datenleitungen mit einem Zonenregler KC verbunden sind, werden über eine ihnen jeweils separat angeschlossene Datenleitung die entsprechenden Signale dem Zonenregler KC zugeleitet. Letzterer vergleicht im einzelnen die zugeleiteten Signale mit von ihm digital gespeicherten Solltemperatur-Wertvorgaben und ermittelt daraus (durch digitalen Meßwertvergleich) deren Abweichung von den Solltemperatur-Wertvorgaben. Außerdem sind dem Zonenregler KC zwei weitere Datenleitungen jeweils separat angeschlossen, die mit dem Regelteil des einzelnen (ersten bzw. zweiten) Trimmluft-Regelventils 91, 92 verbunden ist. Deshalb wird der Zonenregler KC bei vorhandener Solltemperatur-Wertabweichung letztere in eine signalgewandelte digitale Stellgröße umsetzen, die von ihm dem Regelteil des ersten und / oder zweiten Trimmluft-Regelventils 91, 92 zugeleitet wird. Daraufhin wird die Zufuhr der triebwerksbezogenen (oder APU-bezogenen) Trimmluft, die den betreffenden Zuluft-Hauptleitungen 31, 32 eingespeist wird, verändert, um mit der separat zugeführten heißen Trimmluftmenge die Temperatur der betreffenden Zuluft, die der ersten und / oder der zweiten Zuluft-Hauptleitung 31, 32 eingespeist wird, verträglich zu verändern. Somit ist die Mischluft aus Komponenten der Frischluft (RAM-Luft) und den rezirkulierten Teilmengen der Umluft und der heißen Trimmluft zusammengesetzt.

Propylaktische Maßnahmen des Brandschutzes werden nach der vorgestellten Lösung derweise umgesetzt, wonach in Situationen eines nicht gewünschten (unvorhersehbaren) Brandausbruches im ersten Unterflurbereich 4 letzterer durch Schließung des Abluft-regelventiles AS-22 dicht geschottet wird. Dafür ist eine separate (notfalls Individual-) Regelung des Abluft-regelventiles AS-22 installiert. Gleichsam unterstützen die Rückschlagklappen R21, R22, R23 das Abschotten der Frachtraumzonen-Bereiche derweise, wonach nicht der geringste Anteil einer mit Ruß- oder sonstigen schädlichen Stoffpartikeln versetzten Abluftmenge bis zur Abluftleitung vordringen wird. Gerade weil in dieser nicht vorhersehbaren (nie ausnehmbaren) Situation damit dem ungeregelten Abluft-Ventilator 16 zur Entfaltung der Saugwirkung nur ungenügend Abluftmengen zugeleitet werden können, besteht eben die Möglichkeit, über die Bypass-Leitung 8 notwendige Luftmengen entsprechender Strömung auszugleichen.

Aus der beiliegenden Fig. 2 wird man unschwer entnehmen, daß nach ihrem Grundriß die mehrfach angenommene fiktive Raumzonen-Aufteilung des ersten Unterflurbereiches 4 nach der Fig. 1 - zumindestes für den (fiktiven) Raumbereich von zwei Frachtraum-Bereichen - durch jeweils eine Schlafkabine 17, 18 belegt wird. Weitere Ausführungen der Klimatisierung und des prophylaktischen Brandschutzes werden ausgespart, weil die vorgesehenen Maßnahmen dazu bereits hinsichtlich der Fig. 1 erläutert werden. Es wird nur soviel ergänzt, daß die nehmlichen fiktiv abgegernzten Frachtraumbereiche nach der Fig. 2 entweder vollständig oder nur teilweise mit entsprechend positionierten Schlafcontainern belegt sind.

Zusammenfassend wird eine Lösung vorgestellt, nach der die Klimatisierung von Unterflurbereichen (unterflurseitigen Räumen) eines Passagierflugzeuges - wie vorbeschrieben - mit entsprechend (klimaverträglicher) aufbereiteter Mischluft belüftet werden, die als verbrauchte Abluft den Räumen zwangsentlüftet wird. Dabei wird den Räumen eine (sogenannte) Zuluft eingeblasen, die über eine Zulufteinheit 21 (über ein Absperrventil AS-21 und diverse Rückschlagklappen R24, R25, R26) [allgemein betrachtet] in einen Frachtraumbereich mit oder ohne vorgesehenen Schlafcontainerbereich eingeblasen wird, die außerdem einen Treppen(haus)aufgang belüftet. Die eingeblasene Luft wird mit Temperaturfühlern ZF-M1 [für den Treppen(haus)aufgang] und ZF-M2 (für den Frachtraum und / oder die Schlafcontainer) gemessen und mit dem (gespeicherten) Sollwert im Zonen-Regler KC verglichen sowie danach entsprechend den Vorschriften (der Klimatisierung von Raumbereichen eines Passagierflugzeug) aufgeheizt. Die geforderte Raumtemperatur wird im Treppenhaus(aufgang) mit einem Raumluftfühler RF-1 und im Frachtraum und / oder Schlafcontainer in zwei Abluftsträngen mit den Temperaturfühlern RF-21, RF-22 gemessen und im Zonen-regler KC gemittelt. Die (sogenannte) Abluft jener Raumbereiche wird über Ablufteinlässe und auch (für den Frachtraum bestimmt) über Rückschlagklappen R21, R22, R23 durch die Saugwirkung eines ungeregelten Abluft-Ventilators 16 abgeführt. Letzterer bläst die Abluft jener Raumbereiche in die Bilge des Passagierflugzeuges, von da aus sie den Flugzeugrumpf verläßt. Die Schottung des Frachtraumes und / oder der Schlafcontainer durch Schließung der Abluft-Hauptleitung 11 mit einem Luftmengen-Regelventiles AS-22 und auch mittels der erwähnten Rückschlagklappen R21, R22, R23 bewirkt, daß - infolge des angenommenen Brandes - keine die Abluft durchsetzenden schädigenden Stoffe, bspw. auch nur Rauch, in das Treppenhaus gelangen wird, sofern der Abluft-Ventilator 16 keine Saugwirkung (mehr) entfaltet. Um den Absaugvorgang zu gewährleisten, wird ein Bypass vorgesehen, über den die Fehlmenge an Abluft, infolge der Abluft-Ventilator 16 seine Saugwirkung entfaltet, ausgeglichen wird.

## Patentansprüche

1. Anordnung zur Klimatisierung von Unterflurbereichen eines Passagierflugzeuges, bestehend aus einer mit Frischluft und Teilmengen der Umluft versorgten Luftmischereinheit (1), die über ihr angeschlossene Zuluft-Hauptleitungen (31, 32), die mit den Unterflurbereichen (4, 5) verbunden sind, temperierte Mischluft rezirkuliert, und einer den Unterflurbereichen (4, 5) angeschlossenen Abluft-Hauptleitung (6), über die der Transfer der verbrauchten Unterflur-Abluft zur Flugzeug-Außenumgebung erfolgt, wobei einer ersten Zuluft-Hauptleitung (31), der eine erste Trimluft-Leitung (71), die einer Trimluft-Versorgungsleitung (7) abgezweigt ist, zugeschalten ist, darauffolgend eine Zulufteinheit (21) angeschlossen ist, die mit einem ersten Unterflurbereich (4) verbunden ist, mit der die Zufuhr von eingespeister Mischluft in den ersten Unterflurbereich (4) geregelt wird, und wobei eine zweite Zuluft-Hauptleitung (32), der eine zweite Trimluft-Leitung (72), die der Trimluft-Versorgungsleitung (7) abgezweigt ist, zugeschalten ist, darauffolgend einem zweiten Unterflurbereich (5), dem Mischluft eingespeist wird, angeschlossen ist, und wobei der Abluft-Hauptleitung (6), mit der eine Bypass-Leitung (8) verbunden ist, darauffolgend eine mit dem ersten Unterflurbereich (4) verbundene Ablufteinheit (22) und eine mit dem zweiten Unterflurbereich (5) verbundene Abluft-Zusatzleitung (15) angeschlossen sind, über die die verbrauchte Unterflur-Abluft beider Unterflurbereiche (4, 5) zur Abluft-Hauptleitung (6) transferiert wird.

2. Anordnung nach Anspruch 1, **dadurch gekennzeichnet, daß** der ersten und der zweiten Trimmluft-Leitung (71, 72) jeweils ein Trimluft-Regelventil (91, 92) zwischengeschalten ist, mit dem die Zufuhr von Trimluft geregelt wird.

3. Anordnung nach Anspruch 1, **dadurch gekennzeichnet, daß** die Zulufteinheit (21) dermaßen aufgebaut ist, wonach sie eine Zuluftleitung (10), die der ersten Zuluft-Hauptleitung (31) verbunden ist, aufweist, an die im vordefinierten Abstand mehrere Zulufteinlaß-Leitungen (101, 102, 103) angeschlossen sind, welche mit den entsprechenden Raumzonen des zonal unterteilt ausgeführten ersten Unterflurbereiches (4) verbunden sind, wobei dem anschlußfreien Leitungsbereich der Zuluftleitung (10) ein Zuluft-Regelventil (AS-21) zwischengeschaltet ist, außerdem innerhalb jeder Zulufteinlaß-Leitung (101, 102, 103) eine Rückschlagklappe (R24, R25, R26) angeordnet ist, wodurch sich die der Zuluftleitung (10) eingespeiste Mischluft luftmengengeregelt über das Zuluft-Regelventil (AS-21) und rückstromverhindernd über die betreffende Rückschlagklappe (R24, R25, R26) der betreffenden Raumzone einblasen läßt.

4. Anordnung nach den Ansprüchen 1 oder 3, **dadurch gekennzeichnet, daß** innerhalb dem Leitungsquerschnitt der ersten Zuluft-Hauptleitung (31) oder des anschlußfreien Leitungsbereich der Zuluftleitung (10) ein erster Temperatursensor (ZF-M2) angeordnet ist, mit dem die Temperatur der zum ersten Unterflurbereich (4) rezirkulierten Mischluft erfaßt wird.

5. Anordnung nach Anspruch 1, **dadurch gekennzeichnet, daß** die Ablufteinheit (22) dermaßen aufgebaut ist, wonach sie eine Abluftleitung (11), die der Abluft-Hauptleitung (6) verbunden ist, aufweist, an die im vordefinierten Abstand mehrere Ablufteinlaß-Leitungen (111, 112, 113) angeschlossen sind, welche mit den entsprechenden Raumzonen des zonal unterteilten ersten Unterflurbereiches (4) verbunden ist, wobei dem anschlußfreien Leitungsbereiches der Abluftleitung (11) ein Abluft-Regelventil (AS-22) zwischengeschaltet ist, außerdem innerhalb jeder Ablufteinlaß-Leitung (111, 112, 113) eine Rückschlagklappe (R21, R22, R23) angeordnet ist, wodurch der Rückstrom der zur Abluftleitung (11) transferierten Unterflur-Abluft verhindert wird.

6. Anordnung nach Anspruch 5, **dadurch gekennzeichnet, daß** innerhalb dem Leitungsquerschnitt von wenigstens zwei der Ablufteinlaß-Leitungen (111, 112, 113) ein Temperatursensor (RF-21, RF-22) angeordnet ist, mit denen die Temperatur der transferierten Unterflur-Abluft der entlüfteten Raumzone erfaßt wird.

7. Anordnung nach Anspruch 5, **dadurch gekennzeichnet, daß** die Abluft-Hauptleitung (6) und die Abluftleitung (11) einer ersten Leitungsverzweigung (13) angeschlossen sind, außerdem mit dieser ersten Leitungsverzweigung (13) eine Abluft-Brückenleitung (12) verbunden ist, an derem freiem Ende eine zweite Leitungsverzweigung (14) angeschlossen ist, mit der die Abluft-Zusatzleitung (15) und die Bypassleitung (8) verbunden ist.

8. Anordnung nach Anspruch 1, **dadurch gekennzeichnet, daß** der Abluft-Hauptleitung (6) ein Abluft-Ventilator (16) angeschlossen ist, mit dem die transferierte Unterflur-Abluft beider Unterflurbereiche (4, 5) angesaugt und in die Bilge eines Flugzeugrumpfes geleitet wird.

9. Anordnung nach Anspruch 8, **dadurch gekennzeichnet, daß** der Abluft-Ventilator (16) ein ungeregelter Ventilator ist, der bei ausreichender Luft-Anströmung, die durch die transferierende Unterflur-Abluft beeinflußt wird, eine Saugwirkung entfaltet, weshalb bei nicht ausreichender Luftströmung der transferierenden Unterflur-Abluft über die Bypass-Leitung (8) der Fehlbedarf durch Zufuhr von abluftfremden flugzeuginternen Luftreserven ausgeglichen wird.

10. Anordnung nach Anspruch 1, **dadurch gekennzeichnet, daß** innerhalb dem Leitungsquerschnitt der zweiten Zuluft-Hauptleitung (32) ein Temperatursensor (ZF-M1) angeordnet ist, mit dem die Temperatur der zum zweiten Unterflurbereich (5) rezirkulierten Mischluft erfaßt wird.

11. Anordnung nach Anspruch 1, **dadurch gekennzeichnet, daß** innerhalb dem zweiten Unterflurbereich (5) ein Raumluft-Sensor (RF-1) angeordnet ist, mit dem die Raumlufttemperatur erfaßt wird.

12. Anordnung nach den Ansprüchen 2, 4, 6, 10 und 11,
**dadurch gekennzeichnet, daß** alle Temperatursensoren (ZF-M1, ZF-M2, RF-21, RF-22) und der Raumluft-Sensor (RF-1), die die erfaßten Lufttemperaturwerte in digitale Signale umsetzen, über eine ihnen separat angeschlossene Datenleitung mit einem Zonenregler (KC) verbunden sind, der die über die betreffende Datenleitung zugeleiteten Signale mit von ihm digital gespeicherten Solltemperatur-Wertvorgaben vergleicht und deren Abweichung von den Solltemperatur-Wertvorgaben digital ermittelt, außerdem dem Zonenregler (KC) separat zwei weitere Datenleitungen angeschlossen sind, die mit dem Regelteil des einzelnen Trimmluft-Regelventils (91, 92) verbunden sind, weshalb der Zonenregler (KC) bei vorhandener Solltemperatur-Wertabweichung letztere in eine signalgewandelte digitale Stellgröße umsetzt, die von ihm dem Regelteil des betreffenden Trimmluft-Regelventils (91, 92) zugeleitet wird, um die Zufuhr der bezogenen Trimmluft, die den Zuluft-Hauptleitungen (31, 32) eingespeist wird, zu verändern.

13. Anordnung nach Anspruch 1, **dadurch gekennzeichnet, daß** die Mischluft aus Komponenten der Frischluft und den Teilmengen der Umluft und der Trimmluft zusammengesetzt ist.

## Claims

1. Arrangement for the air-conditioning of underfloor regions of a passenger aircraft, comprising an air mixer unit (1), which is supplied with fresh air and partial quantities of the circulating air and which via incoming-air main lines (31, 32) connected thereto and to the underfloor regions (4, 5) recirculates temperature-controlled mixed air, and comprising an outgoing-air main line (6), which is connected to the underfloor regions (4, 5) and via which the transfer of used underfloor outgoing air to the external ambience of the aircraft is effected,
wherein there is subsequently connected to a first incoming-air main line (31), to which a first trim-air line (71) branching off from a trim-air supply line (7) is connected, an incoming-air unit (21), which is connected to a first underfloor region (4) and by means of which the supply of fed mixed air into the first underfloor region (4) is controlled, and wherein a second incoming-air main line (32), to which a second trim-air line (72) branching off from the trim-air supply line (7) is connected, is subsequently connected to a second underfloor region (5), to which mixed air is fed, and wherein there are subsequently connected to the outgoing-air main line (6), to which a bypass line (8) is connected, an outgoing-air unit (22) connected to the first underfloor region (4) and an outgoing-air additional line (15) connected to the second underfloor region (5), via which the used underfloor outgoing air of both underfloor regions (4, 5) is transferred to the outgoing-air main line (6).

2. Arrangement according to claim 1, **characterized in that** connected in series to the first and the second trim-air line (71, 72) there is in each case a trim-air control valve (91, 92), by means of which the supply of trim air is controlled.

3. Arrangement according to claim 1, **characterized in that** the incoming-air unit (21) is so constructed that it comprises an incoming-air line (10), which is connected to the first incoming-air main line (31) and to which in a predefined spacing a plurality of incoming-air inlet lines (101, 102, 103) are connected, which are connected to the corresponding spatial zones of the zonally subdivided first underfloor region (4), wherein an incoming-air control valve (AS-21) is connected in series to the connection-free line region of the incoming-air line (10), a nonreturn flap (R24, R25, R26) moreover being disposed inside each incoming-air inlet line (101, 102, 103), with the result that the mixed air fed to the incoming-air line (10) may be admitted with simultaneous control of the air quantity via the incoming-air control valve (AS-21)and with simultaneous backflow prevention via the relevant nonreturn flap (R24, R25, R26) of the relevant spatial zone.

4. Arrangement according to claim 3, **characterized in that** disposed inside the line cross section of the first incoming-air main line (31) or of the connection-free line region of the incoming-air line (10) is a first temperature sensor (ZF-M2), by means of which the temperature of the mixed air recirculated to the first underfloor region (4) is sensed.

5. Arrangement according to claim 1, **characterized in that** the outgoing-air unit (22) is so constructed that it comprises an outgoing-air line (11), which is connected to the outgoing-air main line (6) and to which in a predefined spacing a plurality of outgoing-air inlet lines (111, 112, 113) are connected, which is connected to the corresponding spatial zones of the zonally subdivided first underfloor region (4),
wherein an outgoing-air control valve (AS-22) is connected in series to the connection-free line region of the outgoing-air line (11), a nonreturn flap (R21, R22, R23) moreover being disposed inside each outgoing-air inlet line (111, 112, 113), thereby preventing the backflow of the underfloor outgoing air transferred to the outgoing-air line (11).

6. Arrangement according to claim 5, **characterized in that** disposed inside the line cross section of at least two of the outgoing-air inlet lines (111, 112, 113) is a temperature sensor (RF-21, RF-22), by means of which sensors the temperature of the transferred underfloor outgoing air of the evacuated spatial zone is sensed.

7. Arrangement according to claim 5, **characterized in that** the outgoing-air main line (6) and the outgoing-air line (10) are connected to a first line branch (13), there moreover being connected to said first line branch (13) an outgoing-air bridge line (12), to the free end of which a second line branch (14) is connected, to which the outgoing-air additional line (15) and the bypass line (8) is connected.

8. Arrangement according to claim 1, **characterized in that** connected to the outgoing-air main line (6) is an outgoing-air fan (16), by means of which the transferred underfloor outgoing air of both underfloor regions (4, 5) is taken in and conveyed into the noses of an aircraft fuselage.

9. Arrangement according to claim 8, **characterized in that** the outgoing-air fan (16) is an uncontrolled fan, which given an adequate approach air flow, which is influenced by the transferring underfloor outgoing air, develops a suction action, for which reason given an inadequate air flow of the transferring underfloor outgoing air via the bypass line (8) the shortfall is compensated by the supply of outgoing-air-free on-board air reserves.

10. Arrangement according to claim 1, **characterized in that** disposed inside the line cross section of the second incoming-air main line (32) is a temperature sensor (ZF-M1), by means of which the temperature of the mixed air recirculated to the second underfloor region (5) is sensed.

11. Arrangement according to claim 1, **characterized in that** disposed inside the second underfloor region (5) is a spatial air sensor (RF-1), by means of which the spatial air temperature is sensed.

12. Arrangement according to claims 2, 4, 6, 10 and 11, **characterized in that** temperature sensors (ZF-M1, ZF-M2, RF-21, RF-22) and the spatial air sensor (RF-1), which convert the sensed air temperature values into digital signals, are linked by a data line, connected separately thereto, to a zone controller (KC), which compares the signals supplied via the relevant data line with temperature setpoint value entries digitally stored thereby and digitally determines their variation from the temperature setpoint value entries, there moreover being separately connected to the zone controller (KC) two further data lines, which are connected to the control part of the individual trim-air control valve (91, 92), for which reason the zone controller (KC) in the event of a temperature setpoint value variation converts the latter into a signal-converted digital manipulated variable, which it supplies to the control part of the relevant trim-air control valve (91, 92) in order to vary the supply of the drawn trim air which is fed to the incoming-air main lines (31, 32).

13. Arrangement according to claim 1, **characterized in that** the mixed air is composed of components of fresh air and the partial quantities of the circulating air and the trim air.

## Revendications

1. Système de climatisation pour la soute à fret d'un aéronef de passagers, constitué, d'une part, d'une unité de mélange de l'air (1) alimentée avec de l'air frais et des sous-ensembles de l'air recirculé et recirculant l'air mixte tempéré par l'intermédiaire des canalisations principales d'air amené (31, 32) auxquelles elle est raccordée, et d'autre part, d'une canalisation principale (6) d'air d'échappement raccordée aux soutes à fret (4, 5), et par l'intermédiaire de laquelle l'air consommé s'échappant de la soute à fret est acheminé vers l'environnement externe de l'aéronef,
une unité d'air amené (21) étant raccordée à une première canalisation principale d'air amené (31) raccordée à une première canalisation d'air de compensation (71) dérivée d'une conduite d'alimentation en air de compensation (7), ladite unité étant raccordée à une première soute de fret (4), réglant l'arrivée de l'air mixte injecté dans la première soute à fret (4), une deuxième canalisation principale d'air amené (32) à laquelle est raccordée une deuxième canalisation d'air de compensation (72) dérivée de la conduite d'alimentation en air de compensation (7) 'aéronef, étant raccordée à une deuxième soute à fret (5) dans laquelle est injecté de l'air mixte, et une unité d'air d'échappement (22) raccordée à la première soute à fret (4) et une canalisation additionnelle d'air d'échappement (15) raccordée à la deuxième soute à fret (5) et acheminant l'air d'échappement consommé des deux soutes à fret (4,5) en direction de la canalisation principale d'air d'échappement (6) étant raccordées à la canalisation principale d'air d'échappement (6) à laquelle est raccordée une canalisation de by-pass.

2. Système selon la revendication 1, **caractérisé en ce qu'**une soupape de réglage de l'air de compensation (91, 92) régulant l'arrivée de l'air de compensation a été interconnectée à la première et à la deuxième canalisation d'air de compensation (71, 72).

3. système selon la revendication 1, **caractérisé en ce que** l'unité d'air amené (21) a été conçue de manière à présenter une canalisation d'air amené (10) reliée à la première canalisation principale d'air amené (31) et à laquelle sont raccordées, à une distance prédéfinie, plusieurs canalisations d'admission d'air amené (101, 102, 103) reliées aux zones spatiales correspondantes de la première soute à fret (4) subdivisée en zones, une soupape de réglage de l'air amené (AS-21) ayant été interconnectée à la zone non raccordée de la canalisation d'air amené (10) et un clapet de retenue (R24, R25, R26) ayant été raccordé à l'intérieur de chaque canalisation d'admission d'air amené (101, 102, 103), permettant par la même occasion d'insuffler l'air mixte injecté dans la canalisation d'air amené (10) via la soupape de réglage de l'air amené (AS-21), avec réglage de la quantité d'air, et via le clapet de retenue (R24, R25, R26) respectif de chaque zone spatiale, en empêchant le reflux.

4. Système selon la revendication 3, **caractérisé en ce qu'**un premier capteur de température (ZF-M2) saisissant la température de l'air mixte recirculé en direction de la première soute à fret a été disposé à l'intérieur de la section transversale de la première canalisation principale d'air amené (31) ou de la zone non raccordée de la canalisation d'air amené (10).

5. Système selon la revendication 1, **caractérisé en ce que** l'unité d'air d'échappement (22) a été conçue de manière à présenter une canalisation d'air d'échappement (11) reliée à la canalisation principale d'air d'échappement (6) et à laquelle sont raccordées, à une distance prédéfinie, plusieurs canalisations d'admission d'air d'échappement (111, 112, 113) reliées aux zones spatiales correspondantes de la première soute à fret subdivisée en zones, une soupape de réglage de l'air d'échappement (AS-22) ayant été interconnectée à la zone non raccordée de la canalisation d'air d'échappement (11) et un clapet de retenue (R21, R22, R23) ayant été raccordé à l'intérieur de chaque canalisation d'admission d'air d'échappement (111, 112, 113), empêchant par la même occasion le reflux de l'air d'échappement de la soute à fret acheminé en direction de la canalisation d'air d'échappement (11) .

6. Système selon la revendication 5, **caractérisé en ce qu'**un capteur de température (RF-21, RF-22) saisissant la température de l'air d'échappement de la soute à fret situé dans la zone spatiale à évacuation d'air a été raccordé à l'intérieur de la section transversale d'au moins deux canalisations d'admission d'air d'échappement (111, 112, 113).

7. Système selon la revendication 5, **caractérisé en ce que** la canalisation principale d'air d'échappement (6) et la canalisation d'air d'échappement (11) ont été raccordées à une première ramification de canalisation (13) et **en ce qu'**une canalisation de pont d'air d'échappement (12) à l'extrémité libre de laquelle a été raccordée une deuxième ramification de canalisation (14) à laquelle ont été raccordées la canalisation additionnelle d'air d'échappement (15) et la canalisation de by-pass (8) a été raccordée à la première ramification de canalisation (13).

8. Système selon la revendication 1, **caractérisé en ce qu'**un ventilateur d'air d'échappement (16) avec lequel l'air d'échappement des deux soutes à fret (4, 5) est aspiré puis guidé jusque dans la cale d'un fuselage d'aéronef a été raccordé à la canalisation principale d'air d'échappement (6).

9. Système selon la revendication 8, **caractérisé en ce que** le ventilateur d'air d'échappement (16) est un ventilateur non réglé qui, lorsque l'écoulement d'air influencé par l'air d'échappement des soutes à fret acheminé est suffisant, déploie un effet d'aspiration, et qui, lorsque l'écoulement de l'air d'échappement des soutes à fret acheminé via la canalisation de by-pass (8) est insuffisant, compense le manque par l'amenée de réserves d'air internes à l'aéronef et étrangères à l'air d'échappement.

10. Système selon la revendication 1, **caractérisé en ce qu'**un capteur de température (ZF-M1) saisissant la température de l'air mixte recirculé en direction de la deuxième soute à fret (5) a été disposé à l'intérieur de la section transversale de la deuxième canalisation principale d'air amené (32).

11. Système selon la revendication 1, **caractérisé en ce que** un capteur d'air ambiant (RF-1) saisissant la température de l'air ambiant a été disposé à l'intérieur de la deuxième soute à fret (5).

12. Système selon les revendications 2, 4, 6, 10 et 11, **caractérisé en ce que** certains capteurs de température (ZF-M1, ZF-M2, RF-21, RF-22) et le capteur d'air ambiant (RF-1), qui convertissent les valeurs de température de l'air saisies en signaux numériques, ont été raccordés, via une ligne de données raccordée séparément à ces capteurs, à un régulateur de zones (KC) comparant les signaux acheminés via la ligne de données concernée à des valeurs de température théorique prédéfinies enregistrées numériquement par ledit régulateur et calculant numériquement l'écart entre lesdits signaux et les valeurs de température théorique prédéfinies, et **en ce que** deux lignes de données supplémentaires raccordées aux éléments de réglage des différentes soupapes de réglage de l'air de compensation (91, 92) ont été raccordées séparément au régulateur de zones (KC), le régulateur de zones (KC) convertissant, en cas d'écart par rapport à la température théorique, les lignes de données en une valeur de réglage numérique modifiée par signaux et attribuée par le régulateur à l'élément de réglage de la soupape de réglage de l'air de compensation (91, 92) concernée, afin de modifier l'amenée de l'air de compensation concerné injecté dans les canalisations principales d'air amené (31, 32).

13. Système selon la revendication 1, **caractérisé en ce que** l'air mixte est constitué de composantes de l'air frais et de sous-ensembles de l'air circulé et de l'air de compensation.
